# EUROPEAN PATENT SPECIFICATION

(11) **EP 2 625 340 B1**
(45) Date of publication and mention of the grant of the patent: **09.08.2017**
(21) Application number: 11830127.4
(22) Date of filing: 07.10.2011
(51) Int. Cl.: E01F 9/696, E04H 12/18

(54) **ROTATING CANTILEVER POST**
DREHENDER AUSLEGERARM
POTEAU ROTATIF EN PORTE-À-FAUX

(30) Priority: 07.10.2010 AU 2010904484
(43) Date of publication of application: 14.08.2013
(73) Proprietor: Oliver, James, Ascot, Queensland 4007 (AU); Borkowsky, Bolle, Wavell Heights, Queensland 4012 (AU)
(72) Inventor: Oliver, James, Ascot, Queensland 4007 (AU); Borkowsky, Bolle, Wavell Heights, Queensland 4012 (AU)
(74) Representative: Prinz & Partner mbB
(86) International application number: PCT/AU2011/001287
(87) International publication number: WO 2012/045126

(56) References cited:
- WO-A1-2008/096958
- WO-A1-2008/096958
- WO-A1-2010/067108
- WO-A1-2011/036432
- KR-B1- 100 960 334
- US-A- 2 694 540
- US-A- 5 772 172
- US-B1- 7 523 912

## Description

### FIELD OF THE INVENTION

The present invention relates to a rotating cantilever post. In some embodiments, a swivel mechanism for a rotating cantilever post is described.

### BACKGROUND

Variable speed limit (VSL) signs are used across the country in conjunction with intelligent transportation systems to lower posted speed limits in areas affected by conditions such as congestion, construction, accidents, and bad weather. VSL signs allow main roads operators to adjust the posted speed limit without changing the permanent sign. Studies have shown that the use of variable speed limit signs have the potential to provide significant benefits in terms of efficient traffic flow and road safety improvements

Existing variable speed limit sign systems currently in use on main roads are attached to overhead fixed posts. Typically, the variable speed limit display is mounted to an arm that extends across the roadway and is spaced above the roadway. A problem with existing variable speed limit sign systems is that when VSL signs are installed, undergo repair or require maintenance, roads around the VSL posts are required to be closed to allow safe access to the signs. As ell as inconveniencing motorists and creating additional traffic congestion, these road closures can be costly. It is an aim of the invention to provide a rotating cantilever post which overcomes or ameliorates one or more of the disadvantages or problems described above, or which at least provides the consumer with a useful or commercial choice.

In WO 2008/096958 A1 a generic swivel mechanism and apparatus are disclosed.

It will be clearly understood that any reference herein to background material or information, or to a prior publication, does not constitute an admission that any material, information or publication forms part of the common general knowledge in the art, or is otherwise admissible prior art, whether in Australia or in any other country.

### DESCRIPTION OF THE INVENTION

The present invention provides an apparatus for supporting a sign or the like, the apparatus comprising a post and an arm having a portion extending away from a longitudinal axis of the post, and drive means operable to cause the arm to rotate relative to the post wherein the drive means comprises: a drive gear operatively associated with one of the post or the arm; and a driven gear operatively associated with the other of the post or the arm; wherein the drive gear is configured such that the drive gear is a worm gear and the drive gear and the driven gear are a self locking gear set wherein the apparatus further comprises locking means to lock the arm against rotation relative to the post.

In one embodiment, the arm comprises a cantilever boom. The arm may comprise a first portion that extends in a vertical direction and a second portion extends away from the first portion. The second portion of the arm may extend generally horizontally. The second portion of the arm may extend both upwardly and horizontally. The second portion of the arm may extend both downwardly and horizontally. The arm is rotatably mounted to the post. In accordance with the present invention, the arm can only be rotated upon actuation of the driving means. In this manner, unwanted rotation of the arm relative to the post, for example, due to wind loads, can be avoided.

In one embodiment, the arm can be rotated through 180° relative to the post in either direction. This effectively allows the arm to be rotated through 360°.

In one embodiment, the arm will be substantially tubular. Alternatively the arm may be of any appropriate shape. The arm may also be a cantilever boom or a cantilever beam. However, no particular limitation should be placed on the invention by the shape of the arm. The arm may comprise at least one bracket on which at least one sign may be mounted. Alternatively signs may be mounted directly to the arm. Preferably the arm is adapted to mount a VSLS. However, the arm is not limited to VSLS mounting, it may accommodate any sign including but not limited to: traffic signals, message boards, tri message signs and other signage which requires accessibility. The arm may be adapted to mount other devices such as speed cameras, safety cameras, monitoring devices, lighting, transmission equipment and/or the like.

The arm may be provided with an elbow section such that the arm may be rotatably mounted relative to the post. Preferably, the arm is adapted to be rotatably mounted at least partially in the post. Alternatively, the arm may be formed with or engages with a mounting such that the arm is rotatably mounted relative to the post. In use, the arm usually extends over a part of a roadway and/or the like in a first position (typically, an in-use position) and is rotatable to a second position where the arm, brackets, signs and or the like may be accessed. The arm is typically mounted such that the arm is rotatable about a substantially vertical axis. Alternatively, the arm may be mounted such that arm is rotatable about a skewed, oblique or substantially horizontal axis such that the arm, which usually extends at a sufficient height above a roadway when in a first position, can be rotated to a second position where a substantial part of the arm is lower relative to the position of the cantilever boom in the first position. Such a rotation about a skewed, oblique or substantially horizontal axis may allow easier access to the arm, brackets, signs and or the like.

The arm may also comprise a double ended boom. The double ended boom may be bifurcated. For example, the double ended boom may be such that the apparatus for supporting a sign or the like may be substantially 'T' or 'Y' shaped. Usually, a rotating cantilever post with a double ended boom would be mounted to a centre median of a roadway and/or the like such that a part of each end section of the cantilever boom extends over a part of the roadway and/or the like in a first position.

The arm is preferably associated with at least one first gear such that rotation of the at least one first gear rotates the cantilever boom.

In another embodiment, a bushing may engage with the arm at and/or near where the arm is rotatably mounted to the post. The bushing is preferably operatively associated with another bushing that engages with the post. Alternatively the bushing may be operatively associated with the post. Normally the bushing or bushings provide for a smooth rotation of the arm relative to the post. The bushing or bushings are normally made of a suitable material, such as a nylon material. Alternatively the bushing or bushings may be made from an alloy, plastic, polymer, ceramic, composite and/or any material according to a suitable materials selection chart. No particular limitation should be placed on the invention by the type and number of bushings used, other means to achieve the same results are envisaged including the use of bearings, surface coatings and/or other means known in the art.

In one embodiment, the post may be provided with at least one slot and tabs towards the top of the post. The tabs are typically formed with or engage with the post. The slot is typically provided in the post between the tabs (e.g. the tabs are located on either side of the slot) to enable the tabs to be squeezed or "pinched" together. At least one pinch bolt is normally mounted in the tabs such that the at least one pinch bolt can squeeze or "pinch" the tabs together such that the post can clamp onto the arm or a bushing or the like, locking it in place. The post is typically formed with or engages with a footing or is mounted to a footing. The footing is usually mounted to a foundation and/or the like. Preferably the post is suitably mounted such that the post extends in a generally vertical orientation.

In another embodiment, the apparatus may be provided with a braking means. The braking means may be used in controlling the swiveling of the arm relative to the post.

In one embodiment, the arm may be provided with at least one braking surface. Typically the at least one braking surface extends from an axis of the arm. A clamping means may be associated with the post. Normally the clamping means is mounted to the post. The clamping means is typically adapted to clamp onto the at least one braking surface to lock the arm in place relative to the post. Alternatively the at least one braking surface may be associated with the post and the clamping means may be associated with the arm. It will be appreciated that the at least one braking surface may be provided on the drive gear, the driven gear and/or a flange attached to the post or arm. Alternatively, the at least one braking surface may be provided on a brake disc, rotor and/or the like. The braking surface may be provided with at least one stop to limit the rotation of the arm relative to the post. Typically the brake disc, rotor and/or the like is associated with the arm or post and the clamping means is associated with the other of the arm or post. The clamping means is typically adapted to be operated by a user. For example a locking bolt or actuator may be operable by a user to cause the clamping means to clamp or unclamp the at least one braking surface. In a preferred embodiment the clamping means may be a calliper. However, other means to achieve the same results are envisaged including the use of brake pads, locking bolts, friction material and/or the like. The axis of at least one of the at least one driven gear is usually the axis of rotation of the boom. At least one of the at least one driven gear is typically formed with or engages with the arm.

In one embodiment, the at least one drive gear is typically rotatably mounted to the post by brackets. The at least one drive gear is preferably operatively associated with the at least one driven gear such that rotation of the at least one drive gear causes rotation of the at least one driven gear. The at least one drive gear may have at least one drive portion so that the at least one drive gear may be rotated by rotating the at least one drive portion. The at least one drive portion is typically formed with or engages with the at least one drive gear The at least one drive portion may be a Phillips-, slot-, square-, Robertson-, hex-, hex socket-, torx-, security torx-, spline-, spline drive- one way-, poly drive-head and or the like. No particular limitation should be placed on the invention by the type of drive portion used. The at least one drive portion may be operated with standard spanner, socket, screw driver, ratchet, power tool, specialised tool and/or the like. Alternatively, the at least one drive gear can be driven by a motor. If the at least one drive gear is driven by a motor it may be electrically, hydraulically, pneumatically powered and/or the like, this can avoid the requirement for maintenance crew to access the at least one drive gear. The at least one drive gear and the at least one driven gear may be housed in one or more housings to protect the gears from the elements.

The at least one drive gear is a worm. The worm may be a left handed or a right handed worm. The at least one drive gear and the at least one driven gear are one self locking worm-and-gear set. Usually in a self locking worm-and-gear set, the worm can always drive the gear, however, the gear cannot drive the worm, as the gear's teeth will simply lock against the worm's teeth, because the force component circumferential to the worm is not sufficient to overcome friction. This is particularly useful because it ensures that rotation of the arm only occurs when the worm is driven, thereby avoiding unwanted rotation of the arm due to wind forces or the like.

In another embodiment, at least one stop may be applied to the post or to the arm to limit the range of rotation of the arm relative to the post. Normally, the at least one stop is applied between the arm and the post. Preferably, the at least one stop is formed with or engages with the at least one drive gear and/or the at least one driven gear. Alternatively this may be a physical stop applied to the pivot or boom supported by the static part of the post.

The major components of the apparatus of the present invention are normally made of a suitable galvanised steel or stainless steel. Alternatively the components of the apparatus of the present invention may be made from an alloy, plastic, polymer, ceramic, composite and/or any material according to a suitable materials selection chart.

Some benefits of embodiments of the apparatus of the present invention may include the following:
1. Construction simplification;
2. Reduced costs;
3. Durability;
4. Ease of assembly;
5. Ease of installation;
6. Ability to operate under most conditions;
7. Safer and easier operation;
8. An overall reduction in costs.

### BRIEF DESCRIPTION OF THE DRAWINGS

One or more preferred embodiments of the invention will now be described, by way of example only, with reference to the accompanying drawings in which:
- Figure 1 is an isometric view of a rotating cantilever post.
- Figure 2 is a front view of a rotating cantilever post.
- Figure 3 is a detailed view of a swivel mechanism for a rotating cantilever post.
- Figure 4 is a detailed view of a bushing for a rotating cantilever post.
- Figure 5 is a top view of a rotating cantilever post.
- Figure 6 is an isometric view of a rotating cantilever post.
- Figure 7 is a detailed view of the swivel mechanism of figure 6.

### DETAILED DESCRIPTION OF THE DRAWINGS

It will be appreciated that the drawings have been provided for the purposes of illustrating preferred embodiments of the present invention. Therefore, it will be understood that the invention should not be considered to be limited solely to the features as shown in the attached drawings.

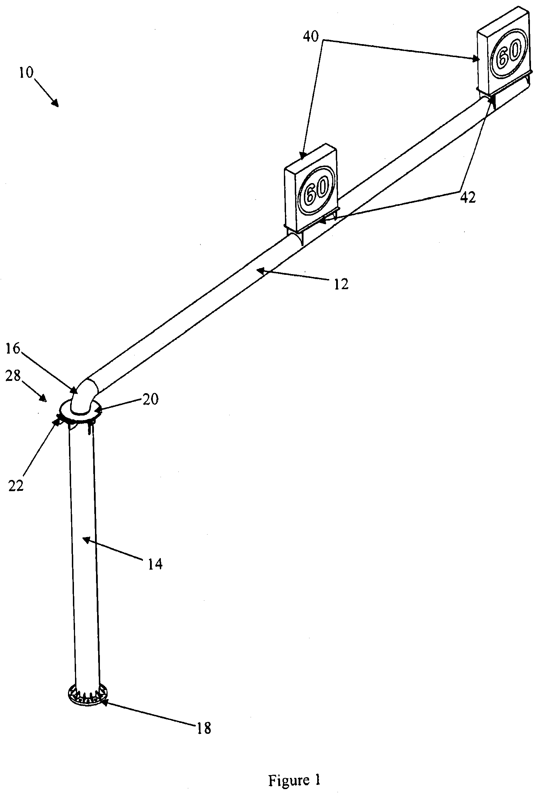

With reference to figures 1-2, an apparatus in accordance with an embodiment of the present invention is shown in the form of a rotating cantilever post 10. The rotating cantilever post 10 has an arm in the form of a cantilever boom 12. Brackets 42 enable signs 40 to be mounted to the cantilever boom 12. The cantilever boom 12 has an elbow section 16 and extends into a post 14. The post 14 has a footing 18 which is mounted to a foundation (not shown). A driven gear in the form of a gear 20 is attached to the cantilever boom 12. A swivel mechanism 28 that enables the cantilever boom 12 to be rotated relative to the post 14 comprises a drive gear in the form of a worm 22 operatively associated with the gear 20.

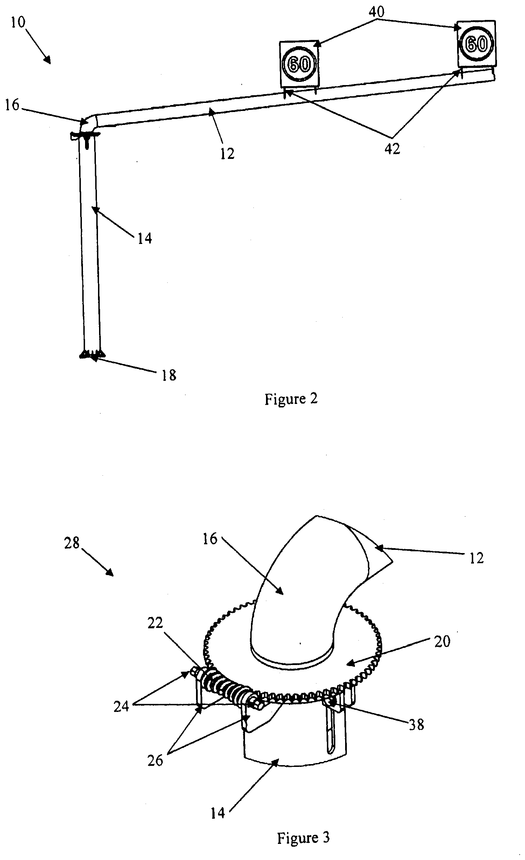

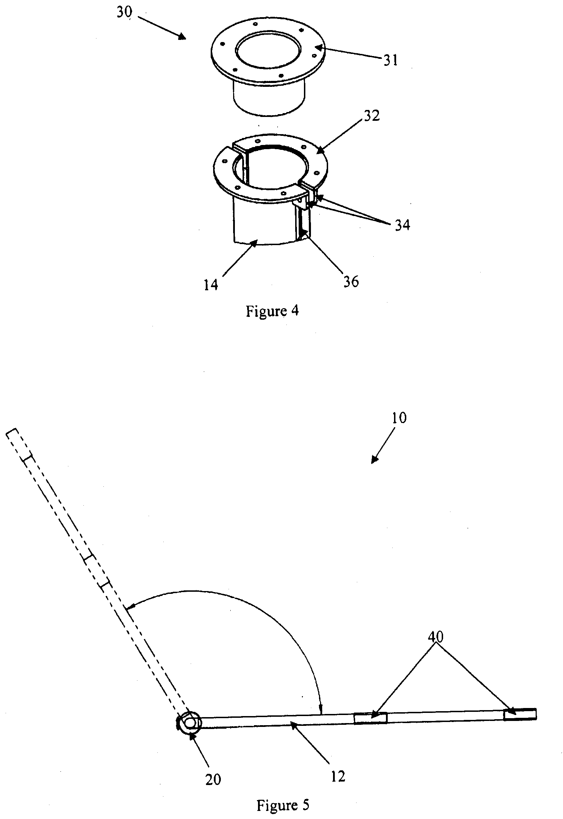

Figures 3 and 4 show the swivel mechanism 28 in detail. The worm 22 is rotatably mounted to the post 14 by brackets 26. Projections 24 on the worm 22 allow a tool (not shown), such as a spanner, ratchet, power tool or the like to turn the worm 22. The projections 24 form the drive portion. When the worm 22 is not being turned, the cantilever boom 12 is locked in position as the gear 20 cannot drive the worm 22. In this regard, the worm screw 20 comprises a self locking worm screw.

A bushing 30 is attached to the cantilever boom 12 and inserted into the post 14 such that bushing flange 31 sits on top of flange 32. The bushing 30 is attached to the cantilever boom 12 such that the cantilever boom 12 cannot rotate relative to the bushing (e.g. by a friction fit). Gear 20 is positioned above the flange 31 of the bushing 30. The post 14 has a slot 36 and tabs 34 located on either side of the slot 36. Pinch bolts 38 are mounted in the tabs 34 such that the pinch bolts 38 can squeeze or "pinch" the tabs 34 together such that the top part of the post 14 clamps onto the bushing 3,0, providing additional locking of the cantilever boom 12.

With reference to figures 3 - 5, when the rotating cantilever post 10 is in use, the cantilever boom 12 is in a first position (see fig 5, solid lines), usually over a roadway (not shown). In this position, the bushing 30 is usually locked in position by pinch bolts 38 as described above and the gear 20 is locked in position by the worm 22. When the cantilever boom 12 has to be rotated to access the signs 40, it for maintenance for example, the pinch bolts 38 are loosened so that the bushing 30 is no longer locked in position by the top of the post, at least one of the projections 24 on the worm 22 is turned in a first direction using a tool (not shown), thus turning the gear 20 and rotating the cantilever boom 12 into a second position (see fig 5, dashed lines as an example), where the signs 40 can be safely accessed. Once the maintenance, for example, has been performed, the worm gear is turned in a second direction using a tool (not shown), thus turning the gear 20 and rotating the cantilever boom 12 back to the first position (see fig 5, solid lines). Alternatively, the worm 22 can be turned in the first direction until the cantilever boom 12 (see fig 5, solid lines) has rotated to the first position. Once the cantilever boom 12 is in the first position, the worm 22 automatically locks gear 20 in position as it is no longer being turned, the pinch bolts 38 are tightened, locking the bushing 30 and the cantilever boom 12 in position.

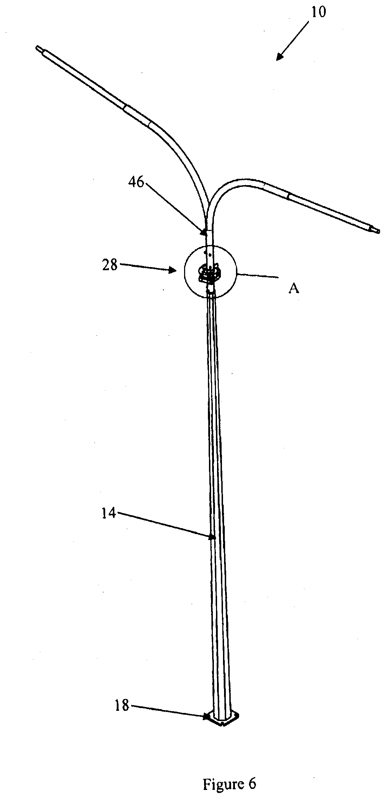

With reference to figure 6, an apparatus in accordance with an embodiment of the present invention is shown in the form of a rotating cantilever post 10. The rotating cantilever post 10 has an arm in the form of a double ended boom 46. The post 14 is mounted to a foundation (not shown) by the footing 18. The swivel mechanism 28 enables the double ended boom 46 to be rotated relative to the post 14.

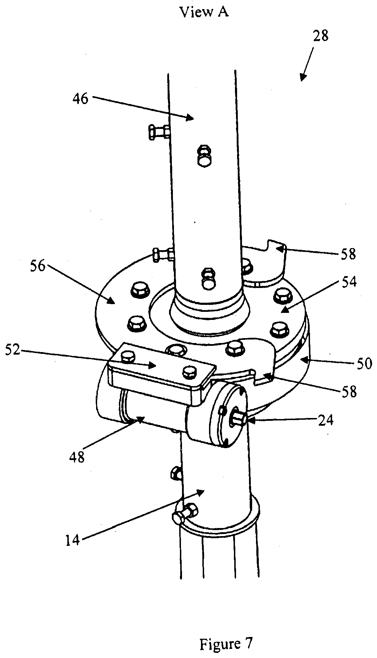

With reference to figure 7, the swivel mechanism 28 of figure 6 is shown in detail. The double ended boom 46 is rotatably mounted to the post 14. The worm (not shown) is partially encased by a worm housing 48 which is mounted relative to the post 14. The gear (not shown) is partially encased by a gear housing 50 which is mounted relative to the post 14. The projection 24 extends from the worm housing such that a tool (not shown), such as a spanner, ratchet, power tool or the like can turn the worm (not shown). A flange 54 is attached to the double ended boom 46. A brake disc 56 is attached to the flange 54. A clamping means in the form of a calliper 52 is mounted relative to the post 14. The calliper 52 is adapted to clamp onto the brake disc 56 to lock the double ended boom 46 relative to the post 14. The brake disc 56 is provided with two stops 58 such that the rotation of the double ended boom 46 relative to the post 14 is limited by the stops 58 abutting the calliper 52.

The foregoing embodiments are illustrative only of the principles of the invention, and various modifications and changes will readily occur to those skilled in the art. The invention is capable of being practiced and carried out in various ways and in other embodiments. It is also to be understood that the terminology employed herein is for the purpose of description and should not be regarded as limiting.

In the present specification and claims (if any), the word "comprising" and its derivatives including "comprises" and "comprise" include each of the stated integers but does not exclude the inclusion of one or more further integers.

Reference throughout this specification to "one embodiment", or "an embodiment" means that a particular feature, structure, or characteristic described in connection with the embodiment is included in at least one embodiment of the present invention. Thus, the appearance of the phrases "in one embodiment" or "in an embodiment" in various places throughout this specification are not necessarily all referring to the same embodiment. Furthermore, the particular features, structures, or characteristics may be combined in any suitable manner in one or more combinations.

In compliance with the statute, the invention has been described in language more or less specific to structural or methodical features. It is to be understood that the invention is not limited to specific features shown or described since the means herein described comprises preferred forms of putting the invention into effect. The invention is, therefore, claimed in any of its forms or modifications within the proper scope of the appended claims (if any) appropriately interpreted by those skilled in the art.

## Claims

1. An apparatus for supporting a sign or the like, the apparatus comprising a post (14) and an arm (12) having a portion extending away from a longitudinal axis of the post (14), and drive means operable to cause the arm to rotate relative to the post, wherein the drive means comprises:
a drive gear (22) operatively associated with one of the post (14) or the arm (12); and a driven gear (20) operatively associated with the other of the post or the arm; wherein the drive gear is configured such that the drive gear (22) is a worm gear **characterized in that** the drive gear (22) and the driven gear (20) are a self locking gear set, wherein the apparatus further comprises locking means (30, 34, 36, 38, 52, 56) to lock the arm against rotation relative to the post.

2. An apparatus as claimed in claim 1, **characterized in that** the locking means comprises at least one braking surface (56) associated with one of the post or the arm, and a clamping means (52) is associated with the other of the post or the arm, and wherein the clamping means (52) is adapted to clamp onto the at least one braking surface (56) locking the arm relative to the post.

3. An apparatus as claimed in claim 1 or 2, **characterized in that** the at least one braking surface is provided with stops (58) such that rotation of the arm (12) is limited by the stops (58) abutting the clamping surface (52).

4. An apparatus as claimed in claim 1, wherein the post (14) is at least partially hollow to receive at least part of the arm therein and wherein the locking means comprises a slot (36) provided towards the top of the post (14), a first tab (34) located on a first side of the slot, a second tab (34) located on a second side of the slot; and a pinch bolt mounted (38) to the first and second tab (34), and wherein the pinch bolt (38) is adapted to bring the first and second tab (34) together or towards each other, clamping the top of the post (14) and locking the arm relative to the post (12).

5. An apparatus as claimed in any one of claims 1 to 4, wherein the drive gear (22) is driven by a motor.

6. An apparatus as claimed in any one of claims 1 to 5, wherein the arm (12) rotates about a substantially vertical axis, or about a skewed axis relative to the post, or about an oblique axis relative to the post, or about a substantially horizontal axis.

7. An apparatus as claimed in any one of claims 1 to 6, wherein the arm (12) comprises a double ended boom.

8. An apparatus as claimed in any one of claims 1 to 7, further comprising at least one bushing (30) at least partially located between the post and the arm.

## Patentansprüche

1. Vorrichtung zur Halterung eines Schilds oder dergleichen, wobei die Vorrichtung einen Pfosten (14) und einen Arm (12) mit einem sich von einer Längsachse des Pfostens (14) weg erstreckenden Abschnitt und Antriebsmittel aufweist, die so betreibbar sind, dass der Arm in eine Drehung bezüglich des Pfostens versetzt wird, wobei das Antriebsmittel Folgendes umfasst:
ein Antriebszahnrad (22), das wirkungsmäßig dem Pfosten (14) oder dem Arm (12) zugeordnet ist, und ein angetriebenes Zahnrad (20), das wirkungsmäßig dem jeweils anderen Element, dem Pfosten oder dem Arm, zugeordnet ist, wobei das Antriebszahnrad so ausgebildet ist, dass es sich bei dem Antriebszahnrad (22) um ein Schneckenrad handelt, **dadurch gekennzeichnet, dass** es sich bei dem Antriebszahnrad (22) und dem angetriebenen Zahnrad (20) um einen selbstverriegelnden Zahnradsatz handelt, wobei die Vorrichtung ferner Verriegelungsmittel (30, 34, 36, 38, 52, 56) zur Verriegelung des Arms gegen eine Drehung bezüglich des Pfostens aufweist.

2. Vorrichtung nach Anspruch 1, **dadurch gekennzeichnet, dass** das Verriegelungsmittel zumindest eine Bremsfläche (56), die dem Pfosten oder dem Arm zugeordnet ist, und ein Klemmmittel (52) aufweist, das dem jeweils anderen Element, dem Pfosten oder dem Arm zugeordnet ist, wobei das Klemmmittel (52) dazu geeignet ist, sich an die mindestens einen Bremsfläche (56) zu klemmen, die den Arm in Bezug auf den Pfosten verriegelt.

3. Vorrichtung nach Anspruch 1 oder 2, **dadurch gekennzeichnet, dass** die mindestens eine Bremsfläche mit Anschlägen (58) versehen ist, so dass die Drehung des Arms (12) durch die Anschläge (58) begrenzt wird, die gegen die Klemmfläche (52) stoßen.

4. Vorrichtung nach Anspruch 1, wobei der Pfosten (14) zumindest teilweise hohl ist, so dass er zumindest einen Teil des Arms aufnimmt, und wobei das Verriegelungsmittel einen zum oberen Teil des Pfostens (14) hin vorgesehean Schlitz (36), eine auf einer ersten Seite des Schlitzes angeordnete erste Lasche (34), eine auf einer zweiten Seite des Schlitzes angeordnete zweite Lasche (34) und einen an der ersten und an der zweiten Lasche (34) angebrachten Klemmbolzen (38) umfasst, wobei der Klemmbolzen (38) dazu geeignet ist, die erste und zweite Lasche (34) zusammenzubringen oder aufeinander zu zu bewegen und dabei den oberen Teil des Pfostens (14) zu klemmen und den Arm in Bezug auf den Pfosten (12) zu verriegeln.

5. Vorrichtung nach einem der Ansprüche 1 bis 4, wobei das Antriebszahnrad (22) von einem Motor angetrieben wird.

6. Vorrichtung nach einem der Ansprüche 1 bis 5, wobei sich der Arm (12) um eine im Wesentlichen vertikale Achse oder um eine bezogen auf den Pfosten schiefe Achse oder um eine bezogen auf den Pfosten schräge Achse oder um eine im Wesentlichen horizontale Achse dreht.

7. Vorrichtung nach einem der Ansprüche 1 bis 6, wobei der Arm (12) einen Ausleger mit zwei Enden umfasst.

8. Vorrichtung nach einem der Ansprüche 1 bis 7, die ferner mindestens eine Buchse (30) aufweist, die zumindest teilweise zwischen dem Pfosten und dem Arm angeordnet ist.

## Revendications

1. Dispositif de support d'un panneau ou similaire, le dispositif comprenant un poteau (14) et un bras (12) qui présente un tronçon s'étendant en éloignement d'un axe longitudinal du poteau (14), et des moyens d'entraînement aptes à être mis en oeuvre de manière à amener le bras à tourner par rapport au poteau, le moyen d'entraînement comportant :
une roue menante (22) associée de manière fonctionnelle au poteau (14) ou au bras (12), et une roue menée (20) associée de manière fonctionnelle à l'autre élément parmi le poteau et le bras, la roue menante étant réalisée de manière à ce que la roue menante (22) soit une roue tangente, **caractérisé en ce que** la roue menante (22) et la roue menée (20) sont un jeu de roues à autoverrouillage, le dispositif comprenant en outre des moyens de verrouillage (30, 34, 36, 38, 52, 56) pour verrouiller le bras contre une rotation par rapport au poteau.

2. Dispositif selon la revendication 1, **caractérisé en ce que** le moyen de verrouillage présente au moins une surface de freinage (56) associée au poteau ou au bras, et un moyen de blocage (52) associé à l'autre élément parmi le poteau et le bras, et le moyen de blocage (52) étant apte à se bloquer sur ladite au moins une surface de freinage (56) verrouillant le bras par rapport au poteau.

3. Dispositif selon la revendication 1 ou 2, **caractérisé en ce que** ladite au moins une surface de freinage est pourvue de butées (58) de sorte que la rotation du bras (12) est limitée par les butées (58) butant contre la surface de blocage (52)

4. Dispositif selon la revendication 1, le poteau (14) étant au moins partiellement creux pour recevoir au moins une partie du bras, et le moyen de verrouillage comprenant une fente (36) prévue vers la partie supérieure du poteau (14), une première patte (34) agencée d'un premier côté de la fente, une deuxième patte (34) agencée d'un deuxième côté de la fente, et un boulon de serrage (38) monté sur la première et la deuxième patte (34), et le boulon de serrage (38) étant apte à amener la première et la deuxième patte (34) ensemble ou l'une vers l'autre bloquant ainsi la partie supérieure du poteau (14) et verrouillant le bras par rapport au poteau (12).

5. Dispositif selon l'une des revendications 1 à 4, la roue menante (22) étant entraînée par un moteur.

6. Dispositif selon l'une des revendications 1 à 5, le bras (12) tournant autour d'un axe sensiblement vertical, ou autour d'un axe incliné par rapport au poteau, ou autour d'un axe oblique par rapport au poteau, ou autour d'un axe sensiblement horizontal.

7. Dispositif selon l'une des revendications 1 à 6, le bras (12) comprenant une flèche à deux bouts.

8. Dispositif selon l'une des revendications 1 à 7, comprenant en outre au moins une douille (30) au moins partiellement agencée entre le poteau et le bras.
